# EUROPEAN PATENT SPECIFICATION

(11) **EP 0 803 189 B1**
(45) Date of publication and mention of the grant of the patent: **31.05.2000**
(21) Application number: 96250250.6
(22) Date of filing: 31.10.1996
(51) Int. Cl.: A01G 23/093

(54) **Brushwood collecting vehicle**
Unterholzsammelfahrzeug
Véhicule de ramassage du bois mort

(30) Priority: 24.04.1996 JP 10294996
(43) Date of publication of application: 29.10.1997
(73) Proprietor: Fuji Car Manufacturing Co., Ltd., Osaka 542 (JP)
(72) Inventor: Tonomura, Akira, c/o Fuji Car Mfg. Co., Ltd., Shiga 524 (JP)
(74) Representative: Wablat, Wolfgang, Dr.Dr.

(56) References cited:
- US-A- 4 254 874
- US-A- 4 338 985
- PATENT ABSTRACTS OF JAPAN vol. 97, no. 1 & JP 08 225101 A (FUJI CAR)

## Description

### FIELD OF THE INVENTION

This invention relates to a brushwood collecting vehicle, and more particularly a brushwood collecting vehicle which carries a cutting member for cutting brushwood into pieces and a container for placing the cut pieces of the brushwood therein.

### BACKGROUND OF THE INVENTION

There has been disclosed the brushwood collecting vehicle of the type in Japanese Utility Model Publication No. 61-21208, which carries a container with an opening defined in an upper side thereof, and a cutting assembly for cutting the brushwood chopped from a tree into pieces. A plurality of cutting blades fixed to a circumferential surface of a disk inside of the cutting assembly are provided to chip the brushwood. The chipped pieces then pass through apertures defined in the disk, and are thrown into the container via the opening from a chute via centrifugal force effected by a thrower, and then placed within the container.

The brushwood collecting vehicle of the above arrangement is disadvantageous in the fact that, during the chipped pieces of the brushwood are thrown towards the opening of the container, they are likely to be scattered around the vehicle by the wind or the like, and therefore some of them do not reach to the opening of the container. Specifically, since the brushwood is usually chipped into fairly small pieces in order to be thrown upwardly only by utilizing the centrifugal force of the thrower after they pass through the apertures of the disk, the chipped pieces could not securely be thrown into the container.

Further, the chipped pieces tend to converge towards a limited area within the container, and therefore do not spread over an entire area of the container. This may degrade the storing capacity of the container.

In accordance with the above arrangement, it is necessary to chip the brushwood into fairly small pieces to allow the cut pieces to pass through the apertures of the disk, to be thrown upwardly and into the container by the centrifugal force of the thrower. Accordingly, it is difficult to reduce the brushwood to predetermined size in accordance with each collecting purpose of the brushwood. For example, a problem has occurred at the time of separating the collected brushwood into branches and leaves, the former being usable for a leaf mold, the latter being usable for an aggregate.

The US-A-4 254 874 describes a tree stump collecting vehicle with a rotatably mounted container for planing the tree stumps therein. The tree stumps are not cut into pieces.

Therefore, it is an object of the present invention to provide a brushwood collecting vehicle which is capable of cutting the brushwood into pieces of predetermined size by a cutting member, feeding the cut pieces into a container without scattering the cut pieces outside of the container, and fully utilizing the entire space of the container.

### SUMMARY OF THE INVENTION

In accordance with the present invention, a brushwood collecting vehicle includes a cutting member for cutting a brushwood into pieces and a container for placing the cut pieces therein, both of which are mounted on a body of the vehicle. A tail gate is provided to open and close an opening of the container, and is equipped with the cutting member and a feeding member for feeding the brushwood to the cutting member. The cutting member includes a rotor being rotatably mounted to the cutting member, and a rotary cutter with a cutting edge protruding from the rotor for cutting the brushwood in cooperation with a fixed cutter. The cutting member defines an exhaust port, through which the cut pieces are exhausted into the inside of the container. The container is rotatably supported on the body, and is provided with a blade protruding from an inner surface of the container for feeding the cut pieces forwardly within the container.

In accordance with the brushwood collecting vehicle of the above arrangement, the brushwood chopped from a tree are fed to the cutting member by the feeding member, and cut into pieces by the rotary cutter and the fixed cutter via the rotation of the rotor. The cut pieces are then exhausted into the container via the exhaust port and placed within the container. This arrangement can prevent the cut pieces from being scattered outside of the container at the time of feeding the cut pieces to the container, which has occurred in the conventional collecting vehicle.

Since the cut pieces are fed forwardly within the container, the cut pieces are forced to be spread over within the container so that the space of the container can be fully used. In addition, even if the cutting member cuts the brushwood into fairly small pieces, the blade extending inside of the container can feed the cut pieces forwardly within the container.

At the time of exhausting the cut pieces out of the container by opening the tail gate, since the cutting member, the feeding member and others mounted on the tail gate are moved together with the tail gate away from the opening so that the cut pieces can smoothly be discharged from the container without the obstruction of these portions.

The feeding member preferably includes a fixed plate with a surface directed towards the rotor, and a feed roller being rotatable for feeding the brushwood on the surface of the fixed plate toward the rotor. The feed roller is preferably constructed in such a manner as to be moved upwardly and downwardly by the brushwood introduced to the feed roller. With this arrangement, the brushwood on the fixed plate is fed towards the rotor by the feed roller, and is cut into pieces by the cutting member. The brushwood may be fed by a vehicle operator or be spontaneously moved via gravity, prior to being fed by the feed roller.

At the time of feeding the brushwood, the feed roller is moved upwardly and downwardly in accordance with the size of the brushwood to constantly apply pressure over the brushwood with its own weight on the fixed plate, and feed the brushwood towards the rotor, while keeping the application of the pressure over it.

Thus, the feeding and the cutting operations can simultaneously be carried out. In addition, the brushwood can securely be held in position, while not slipping away from the rotary cutter, since the brushwood is fed under the pressure.

The feed roller is preferably fixed to a swing arm which is swingable around a pivot which is positioned between the container and the rotor, and below a rotary shaft of the feed roller at the time that the feed roller is positioned at the lowermost position. The swing motion of the swing arm causes the upward and downward motion of the feed roller. This moving direction of the feed roller can approximate to the vertical direction relating to the feeding direction of the brushwood since the pivot is positioned closer to the container to increase the length between the feed roller and the pivot. As another advantage associated with this arrangement, both the feeding member and the cutting member can neatly and compactly be mounted to the tail gate.

Since the pivot of the swing arm is positioned below the rotary shaft of the feed roller, the feed roller can securely and upwardly be moved by the brushwood on the fixed plate. That is, the feed roller is pushed upwardly or towards the container by the brushwood carried on the fixed plate. In this regard, even if the feed roller is pushed forthrightly towards the container by the brushwood, it can securely and upwardly be moved, since the swing arm can securely and upwardly be swung around the pivot positioned below the rotary shaft of the feed roller.

The fixed plate is slanted downwardly towards the rotor, which arrangement allows the brushwood to easily slide towards the rotor. Thus, the feed roller can easily feed the brushwood towards the rotor without a conveying means such as a belt conveyor. This contributes to the simultaneous and smooth operation to feed and cut the brushwood. In addition, this arrangement enables the feeding member to be manufactured in a light weight.

It is preferable that the feeding member is controlled in such a manner as to feed the brushwood of such a size as to be cut by the rotary cutter at one time. By employing this arrangement, the brushwood can be cut into pieces of predetermined size by the rotary cutter by adjusting the feeding size of the brushwood for each cut with the rotary cutter.

The rotor preferably defines an escape cutout in a circumferential surface thereof, which escape cutout extends in the rotational direction of the rotor from a protruding position of the cutting edge of the rotary cutter to predetermined portion for allowing the cut pieces to be escaped therein. This arrangement can avoid the cut pieces from obstructing the cutting operation by leaving around the cutting area, and accordingly achieve the smooth cutting operation. That is, the brushwood interposing between the rotary cutter and the fixed cutter is brought into contact with the rotary cutter and then cut by the rotation of the rotor. During the cutting operation, some of the cut pieces of the brushwood are escaped into the escape cutout, and therefore are unlikely to block the rotation of the rotor by remaining around the rotor.

A substantially L-shaped mounting cutout is preferably formed in the circumferential surface of the rotor to mount the rotary cutter thereon. The mounting cutout is defined by a mounting surface, and a rising surface rising from the mounting surface in such a manner as to tilt towards the mounting surface. With this arrangement, when the rotor is rotated, centrifugal force effected by this rotation is applied over the rotary cutter, while the force of counteraction to the centrifugal force is applied over the rotary cutter via the rising surface. This action can reduce the force acting over a fixing means of the rotary cutter in such a manner as to securely fix the rotary cutter, even if the rotor is rotated at high speed.

The rotary cutter may preferably be provided with an aperture, through which a fixing means such as a bolt extends to fix the rotary cutter in position. The aperture is elongated towards the cutting edge so that the rotary cutter can slide towards the cutting edge with regard to the fixing means. In accordance with this arrangement, by insertion of the fixing means into the aperture, or by removal of the fixing means from the aperture, the rotary cutter can be mounted to or dismounted from the rotor in an easier manner than ever. In addition, in case of that the cutting edge has been worn away, and therefore it does not protrude away from the circumferential surface of the rotor to predetermined height, the rotary cutter is first released from fixed state by loosening the fixing means, and is slid outwardly to protrude to predetermined height.

It is preferable that a screen is removably attached to the exhaust port, and defines an aperture therein for allowing the cut pieces of predetermined size to pass therethrough, and holding the cut pieces being larger than the predetermined size thereon until the cut pieces are cut by the rotary cutter and are reduced to such a size as to pass through the aperture. With this arrangement, only the cut piece of predetermined size can be collected within the container On the other hand, by removing the screen, all of the cut pieces cut by the rotary cutter and the fixed cutter are exhausted into the container. Thus, the size of the cut pieces of the brushwood can be adjusted by mounting or removing the screen, or varying the diameter of the aperture in accordance with a kind of the brushwood, and purposes of the brushwood collection, such as a type of recycling. Particularly, when the brushwood is to be separated to branches and leaves, the smooth separation can be accomplished by collecting the cut pieces with such a size that they can easily be separated.

It is preferable to direct an edge of the blade in the rotational direction of the container. With this arrangement, when the blade lifts the cut pieces upwardly and subsequently feeds the same forwardly within the container via the rotation of the container, the cut pieces are unlikely to fall from the blade onto their previous position where the cut pieces are placed before they are lifted up by the blade under the exhaust port. Thus, the feeding operation of the cut pieces can securely be carried out.

### BRIEF DESCRIPTION OF THE DRAWINGS

FIG. 1 is a side elevational view of a brushwood collecting vehicle in accordance with one embodiment of the present invention.

FIG. 2 is an enlarged cross section taken along a line A-A of FIG. 1.

FIG. 3 is a rear elevational view of the brushwood collecting vehicle of FIG. 1 with omission of a supporting frame of a chute table, the chute table and side plates.

FIG. 4 is an enlarged side elevation with a cross section of an essential portion of the vehicle in accordance with the one embodiment of the present invention.

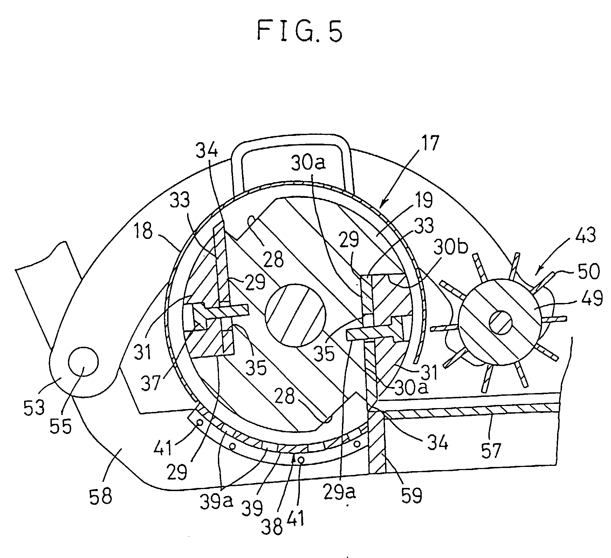

FIG. 5 is an enlarged side elevation with a cross section of an essential portion of the vehicle in accordance with the one embodiment of the present invention.

FIG. 6 is an enlarged rear end elevation of an essential portion of the vehicle in accordance with the one embodiment of the present invention.

FIG. 7 is an enlarged side elevation illustrating the chute table tilting rearwards in accordance with the one embodiment of the present invention.

FIG. 8 is an enlarged rear elevation of an essential portion illustrating the side plates in closing state in accordance with the one embodiment of the present invention.

FIG. 9 is a schematic view illustrating a driving means for a cutting assembly and feeding member in accordance with the one embodiment of the present invention.

FIG. 10 is a rear elevation of the brushwood collecting vehicle in accordance with another embodiment of the present invention.

FIG. 11 is an enlarged side view with a cross section of an essential portion of the vehicle in accordance with another embodiment of the present invention.

### DETAILED DESCRIPTION OF THE PREFERRED EMBODIMENTS

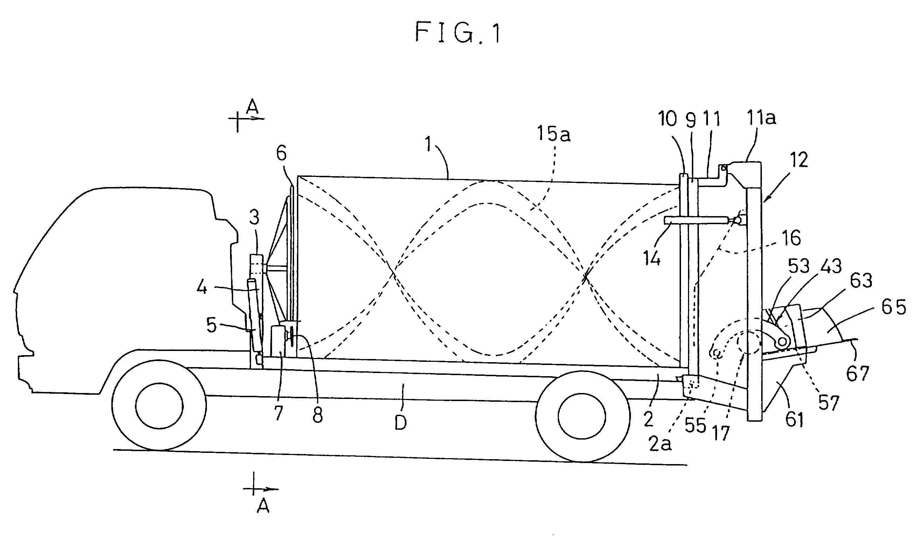

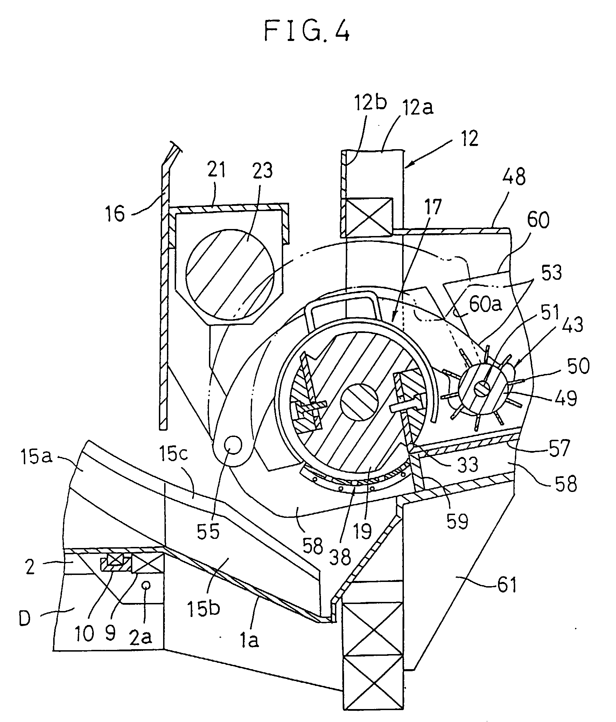

As illustrated in FIGS. 1 and 4, a brushwood collecting vehicle includes a container 1 rotatably mounted on a vehicle with an opening defined by a rear side of the container 1, and a tail gate 12 for opening and closing the opening of the container 1. The tail gate 12 is equipped with a cutting assembly 17 and a feeding member 43 for feeding the brushwood to the cutting assembly 17.

The container 1 is defined by a cylindrical body and a rear portion 1a being rearwardly flared from the cylindrical body, and is rotatably mounted on a frame 2 made for a dumping mechanism which is, in turn, rotatably supported by a shaft 2a at the rear end of a body D.

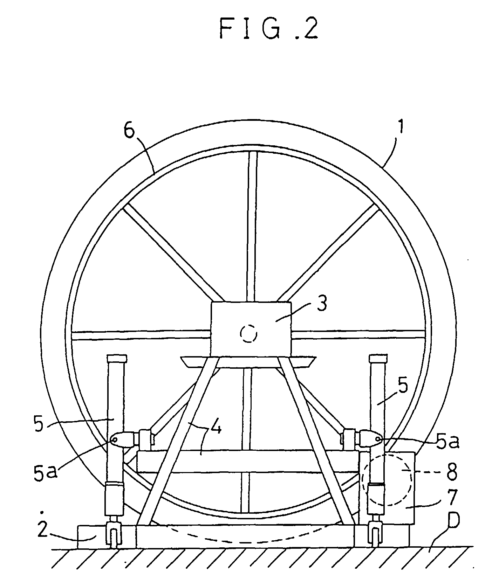

The container 1 is supported at its front portion in such a manner as to be rotatable around an axis of the cylindrical main body via a bearing 3 of a supporting table 4 mounted on a front portion of the frame 2, as illustrated in FIGS. 1 and 2, and rotatably supported at its rear portion with a swing bearing 10 of a supporting frame 9 mounted on a rear portion of the frame 2, as illustrated in FIG. 4. The container 1 is thus rotatably supported on the frame 2.

The bearing 3 is fixed to an upper end of the supporting table 4, as illustrated in FIG. 2, while the swing bearing 10 is fixed to a front side of the supporting frame 9, as illustrated in FIG. 4.

As illustrated in FIG. 2, the supporting table 4 is pivotally connected to the body D via cylinders 5 and pins 5a. The cylinders 5 are pivotally connected to the body D. With this arrangement, the frame 2 is swingable around the shaft 2a, and the front portion thereof can be lifted by the extension of the cylinders 5 to dump contents placed inside of the container 1.

A toothed wheel 6 is fixed to a front side of the container 1 in such a manner as to be coaxially aligned with the container 1, and be engageable with a pinion 8 which is connected to a hydraulic motor 7 which is disposed on a front portion of the frame 2. In accordance with this arrangement, the rotation of the container 1 can be accomplished via the rotation of the pinion 8.

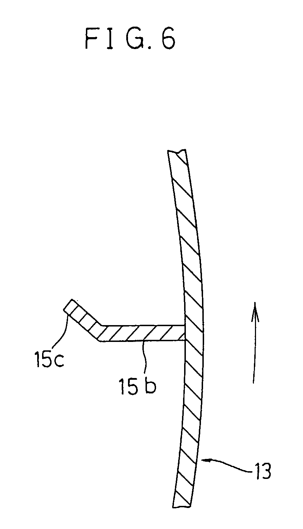

Two strips of feeding blades 15a project from an inner surface of the cylindrical body of the container 1 and helically extend inside of the container 1 with predetermined spacing from each other, as illustrated in FIG. 1. Within the rear portion 1a of the container 1, four strips of lifting-up blades 15b extend in the circumferential direction of the rear portion 1a of the container 1 with predetermined spacing from each other to lift up the cut pieces of the brushwood by the cutting assembly 17. The feeding blades 15a and the lifting-up blades 15b project from the inner surface of the container 1 towards a rotational axis of the container 1, and edges 15c of the lifting-up blades 15b are respectively bent at an angle of 45° in the rotational direction of the container 1, as illustrated in FIG. 6. The lifting-up blades 15b project to such a height that edges 15c thereof do not contact a guide plate 16 extending from the tail gate 12 and positioned inside of the lifting-up blades 15b, or other parts, as illustrated in FIG. 4.

As illustrated in FIGS. 1 and 4, the guide plate 16 extends forwardly and slantingly to predetermined height to form a slanting surface, along which the cut pieces falling from the lifting-up blades 15b slide forwardly towards the inner space of the cylindrical body of the container 1. The guide plate 16 defines an opening at its lower portion to enable the cut pieces of the brushwood exhausted by the cutting assembly 17 to fall onto a lower surface of the container 1.

As illustrated in FIG. 1, the tail gate 12 is swingably connected to an upper end of the supporting frame 9 via a rearwardly extending arm 11 and a hanging hook 11a, and is swingable by the actuation of cylinders 14 disposed at both sides of the supporting frame 9 to open and close the opening of the container 1. The tail gate 12 includes a frame 12a and a blocking panel 12b connected to the frame 12a. The blocking panel 12b defines an opening, through which the cutting assembly 17 is connected to the blocking panel 12b.

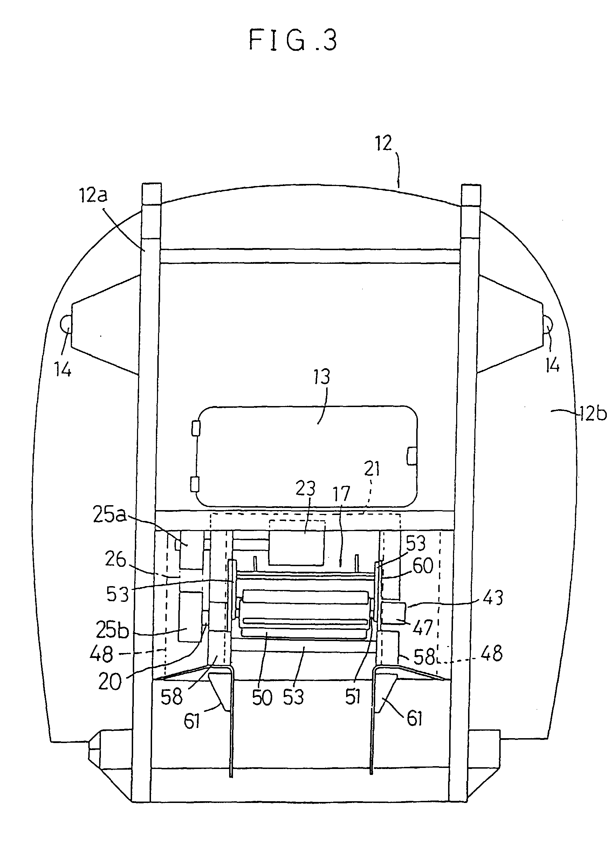

As illustrated in FIG. 3, an upper throwing port is defined in the tail gate 12, and is opened and closed by a door member 13. The brushwood can directly be thrown into the container 1 via the upper throwing port, when it is not needed to be cut by the cutting assembly 17. The upper throwing port is closed by a door member 13 in FIG. 3, and is therefore not shown in FIG. 3.

The feeding member 43 includes a fixed plate 57 which slants downwardly towards the cutting assembly 17 to carry the brushwood thereon, and a feed roller 49 for feeding the brushwood on the fixed plate 57 towards the cutting assembly 17. The fixed plate 57 is supported at its both sides by fixed frames 58 which are respectively disposed at both sides of the vehicle and slant downwardly towards the front of the vehicle. The fixed frames 58 are respectively supported at their lower surfaces by supporting frames 61 which rearwardly extend from a periphery of a lower end of the frame 12a of the tail gate 12.

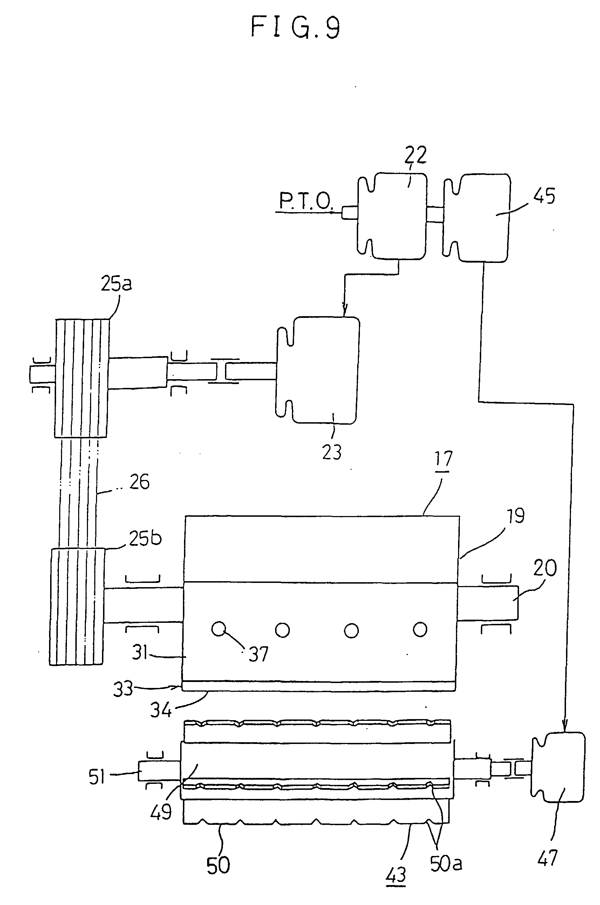

Ten strips of feeding blades 50 radially and outwardly extend from a circumferential surface of the feed roller 49 with predetermined spacing to each other to feed the brushwood carried on the fixed plate 57 towards the cutting assembly 17. A plurality of substantially V-shaped notches 50a are formed in outer edges of the feeding blades 50, as illustrated in FIG. 9.

The feed roller 49 is rotatably supported at both ends of its laterally extending rotary shaft 51 by rear ends of swing arms 53, front ends of which are respectively and pivotally connected to pivots 55 in such a manner as to be swingable around the pivots 55, and allow the feed roller 49 to be movable upwardly and downwardly. In this arrangement, the pivots 55 are respectively fixed to the fixed frames 58 in such a manner as to be positioned between the container 1 and the cutting assembly 17, and below the rotary shaft 51 of the feed roller 49 at the time that the feed roller 49 is positioned at the lowermost position. The swing arms 53 are substantially identical in shape to each other, and each has an arcuate portion at its middle portion to avoid themselves from contacting the cutting assembly 17.

The rotary shaft 51 of the feed roller 49 is connected at its one end to a hydraulic motor 47 mounted to the swing arm 53 adjacent to the one end of the rotary shaft 51 so that the feed roller 49 can be rotated by the hydraulic motor 47. The hydraulic motor 47 is actuated by a hydraulic pump 45 connected to a power take-off (not shown) of the vehicle.

A fixed cutter 59 is fixed to the fixed frames 58 adjacent to a front end of the fixed plate 57 near the cutting assembly 17. A side plate 60 is fixed to each of the opposite sides of the fixed frames 58 to prevent the brushwood from falling from a side of the fixed plate 57. A circular groove 60a is defined in each side plate 60, a curve of which is defined about the pivot 55 as a center. That is, the circular groove 60a extends in the same line as the path of the feed roller 49 to allow the feed roller 49 to move upwardly and downwardly along the grooves 60a, as illustrated in FIG. 4. Covering members 48 are respectively mounted to the sides of the fixed frames 58 to cover a pulley 25a, the hydraulic motor 47 and the like, as illustrated in FIGS. 3 and 4.

The cutting assembly 17 includes a covering member 18, a substantially cylindrical rotor 19 rotatably mounted inside of the covering member 18, and a rotary cutter 33 which is mounted to the rotor 19 and has a cutting edge 34 projecting radially and outwardly from the circumferential surface of the rotor 19 to cut the brushwood in cooperation with the fixed blade 59. The rotor 19 is rotatable by a hydraulic motor 23 via pulleys 25a and 25b, the former being fixed to one end of a rotary shaft of the hydraulic motor 23, the latter to a rotary shaft 20 of the rotor 19, as illustrated in FIG. 9. A V-belt 26 is wound around the pulleys 25a and 25b to transfer the rotational force of the hydraulic motor 23 to the rotor 19 so that the rotor 19 can be rotated by the hydraulic motor 23. The hydraulic motor 23 is actuated by a hydraulic pump 22 which is coaxially aligned with the hydraulic pump 45 and is connected with the power take-off (not shown), as illustrated in FIG. 9. The hydraulic pumps 22 and 45 are respectively equipped with flow control valves (not shown) to adjust the discharge therefrom. The hydraulic motor 23 is fixed to a motor supporting frame 21 which is, in turn, fixed to upper ends of the fixed frames 58 which extend inside of the tail gate 12 and rises upwardly, as illustrated in FIG. 4.

The rotor 19 defines two L-shaped mounting cutouts 29 in its circumferential surface to be oppositely positioned with the rotary shaft 20 therebetween. Each mounting cutout 29 is defined by a mounting surface 30a and a rising surface 30b, the former contacting a surface of the rotary cutter 33, the latter rising straightforward from the mounting surface 30a at an acute angle in such a manner as to tilt towards the mounting surface 30a. The mounting surfaces 30a each defines a thread hole 29a, into which a leg of a bolt 37 is screwed to fix the rotary cutter 33 on the mounting surface 30a.

The rotary cutters 33 each are positioned so that their cutting edges 34 protrude from the circumferential surface of the rotary cutter 33, and are pressed radially and inwardly by a pressure member 31. The pressure member 31 is formed so that a radially and inwardly facing surface thereof can contact the corresponding rising surface 30b, and a circumferential surface thereof becomes flush with the circumferential surface of the rotor 19 in a mounted state to form a part of the circumferential surface of the rotor 19. The pressure members 31 each are provided with an aperture of such a shape that a leg portion of the respective bolt 37 is fitted thereinto until a head thereof rests on a stepped portion formed within the aperture. That is, the stepped portion of each aperture is positioned so that the head of the bolt 37 does not protrude away from the circumferential surface of the pressure member 31.

The rotary cutters 33 each define an aperture 35 which has a width being substantially equal to an outer diameter of the leg of the bolt 37, and is elongated in the lengthwise direction of the rotary cutter 33 towards the cutting edge 34. To clamp the rotary cutter 33 by the mounting surface 30a of the mounting cutout 29 and the pressure member 31, the bolt 37 is first inserted into the aperture of the pressure member 31 and the aperture 35 of the rotary cutter 33, and then is screwed into the threaded hole 29a of the rotor 19. The protruding length of the rotary cutter 33 can easily be adjusted by sliding the rotary cutter 33 in its lengthwise direction on the mounting surface 30a.

The circumferential surface of the rotor 19 defines two escape cutouts 28, each of which having a substantially L-shape and extending in the rotational direction of the rotor 19 from the outer end of the mounting surface 30a to predetermined position for allowing the cut pieces to escape therein.

The cover 18 opens downwardly towards a lower surface of the container 1 to form an exhaust port 38 of the cutting assembly 17. The exhaust port 38 is covered by a screen 39 with a plurality of circular apertures 39a, each of which has a diameter of 30mm. The screen 39 is spaced apart from the rotary cutter 33 so that the cut pieces which did not pass through the apertures 39a, and left on the screen 39 can be cut by the rotary cutter 33 until they each are reduced to a size being equal to or smaller than the diameter of the aperture 39a, or such a size as to pass through the apertures 39a. The screen 39 is positioned so that an inner surface thereof lies in an imaginary circular line defined by the inner surface 18a of the cover 18. The screen 39 is removably attached to the fixed frame 58 via bolts 41.

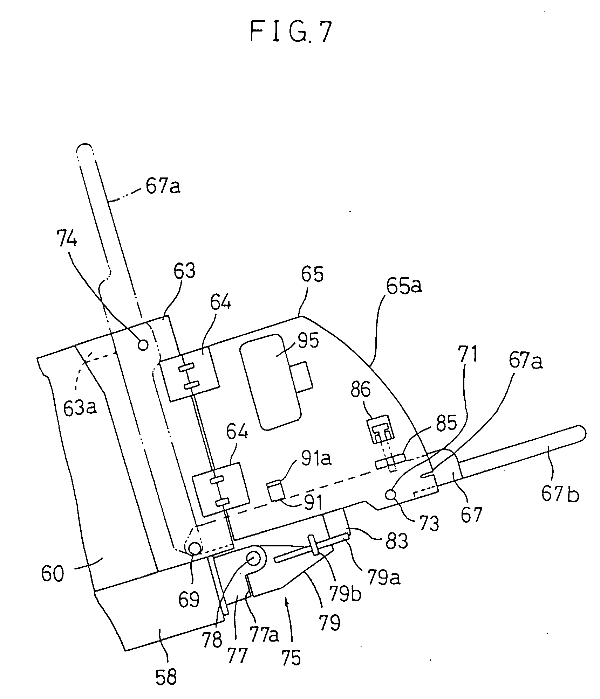

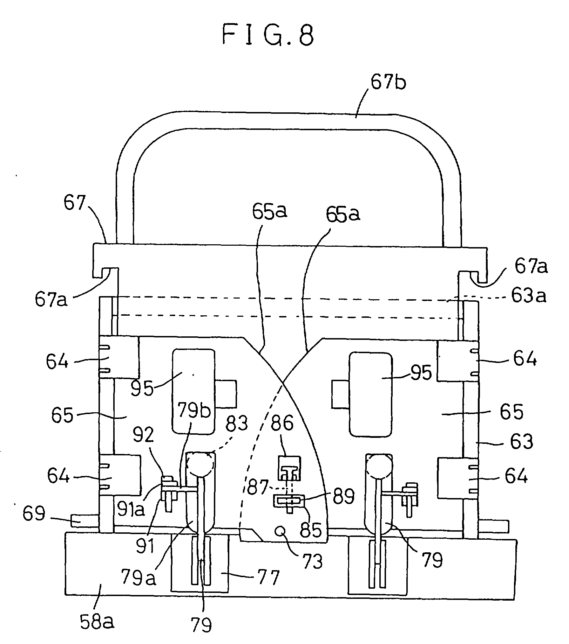

A pair of supporting frames 63 are respectively mounted on rear portions of the fixed frames 58, as illustrated in FIGS. 1 and 7. Side plates 65 are respectively hinged to rear ends of the supporting frames 63 at hinges 64, as illustrated in FIGS. 7 and 8. A chute table 67 is pivotally connected to the rear ends of the supporting frames 63 via pivots 69 in such a manner as to turn around the pivots 69 upwardly to a withdrawal position and downwardly to an operative position. When the brushwood is to be placed on the chute table 67 in this arrangement, the side plates are first opened sidewards, and then the chute table 67 is turned downwards from the withdrawal position to the operative position to extend rearwards along the lower edges of the side plates 65. The edges 65a of the side plates 65 opposite to the hinged edges are shaped into a part of a circle, a center of which is the corresponding pivot 69. The chute table 67 forms a pair of detent portions 67a at upper portions of the opposite side edges thereof so that, as the chute table 67 is turned into the operative position, the detent portions 67a are moved along the respective circular edges 65a and are positioned at lower portions of the circular edges 65a to arrest the movement of the side plates 65 when the chute table 67 is in the operative position.

As illustrated in FIG. 7, a pair of receiving blocks 75 are mounted to a rear side of a laterally extending frame 58a extending between the rear ends of the opposite fixed frames 58. In this figure, the blocks 75 are in operative position, and each block 75 includes a bracket 77 fixed to a rear side of the fixed frame 58, a receiving member 79 pivotally connected to the bracket 77 via a pivot 78, and a rubber member 83 fixed to an upper surface of a flat portion 79a of the receiving member 79 for abutting against a lower surface of the chute table 67. The receiving member 79 is turned upwardly to a withdrawal position from the operative position. The receiving blocks 75 of this arrangement can block the chute table 67 from moving downwardly further from its operative position. The bracket 77 forms an abutting surface 77a therein for abutting against the receiving member 79 at the time that the receiving member 79 is turned downwardly. The receiving member 79 is blocked by this abutting surface 77a. The side plates 65 each define an aperture 73 at its lower side which is positioned to be associated with an aperture defined in the corresponding side of the chute table 67 at the time that the chute table 67 is in its operative position. The side plates 65 and the chute table 67 can be locked together by inserting pins into these apertures.

As illustrated in FIG. 8, the side plate 65 of a left hand side when viewed from the rear of the vehicle defines an opening 85, while the opposite side plate 65 has a projection 89 which projects therefrom to be inserted into the opening 85 when the side plates 65 are in close state. A pin 87 is mounted to the side plate 65 of the left hand side in such a manner as to be moved into and out of the opening 85. On the other hand, the projection 89 defines an aperture, into which the pin 87 can be inserted. The side plates 65 can be locked by inserting the pin 87 into the aperture of the projection 89. In this embodiment, the pin 87 preferably exposes outside via an opening 86 defined in the side plate 65 above the opening 85.

L-shaped members 91 are respectively fixed to the side plates 65, and each of the members 91 defines an aperture in an upper surface portion 91a. On the other hand, the receiving members 79 each include a side projection 79b projecting sidewards from the receiving member 79 which defines an aperture. After closing the side plates 65, the receiving members 79 are turned upwardly to the withdrawal position so that the apertures of the upper surface portions 91a of the L-shaped members 91 can be associated with the through holes of the projections 79b of the receiving members 79. In this state, a pin 92 is inserted into these holes to maintain the receiving members 79 in the withdrawal position, as illustrated in FIG. 8.

The supporting frame 63 is formed by vertically extending portions which extend upwardly from the both sides of the fixed frames 58, and a bridging portion 63a connected between upper ends of the vertically extending portions, as illustrated in FIG. 8. The bridging portion 63a is provided to receive the chute table 67 and block the same from falling forwardly, when the chute table 67 is set at the withdrawal position. The supporting frame 63 defines apertures 74 at the both vertically extending portions thereof, through which pins can be inserted into the corresponding apertures of the chute table 67 in its withdrawal position.

The side plate 65 is equipped with an emergency control box 95 for emergency shut down of the hydraulic motors 23 and 47. A handle member 67b having the substantially same width as that of the chute table 67 is fixed to the chute table 67, and have such a dimension or length as to avoid the operator from accidentally touching the feed roller 49.

The operational steps of the brushwood collecting vehicle in accordance with the above arrangement will be described, taking the example of that the outer edges of the feeding blades 50 each advance 20mm per one rotation of the rotor 19 by adjusting the discharge of the hydraulic pumps 22 and 45.

The tail gate 12 is first opened to collect the brushwood, and the screen 39 is then attached in position via the bolts 41 in order to cut the brushwood into pieces of predetermined size or smaller. On the contrary, when the brushwood is to be placed within the container 1 after the cut pieces are exhausted from the cutting assembly 17 without sifting operation. In this example, the screen 39 is attached in position.

The vehicle is driven to an actual site, and a tree is chopped down to collect the brushwood. At this time, the receiving blocks 75 are turned rearwards to the operative position, and the side plates 65 are opened sidewards. The chute table 67 is then rearwardly turned to the operative position, and then the pins 71 are respectively inserted into the apertures 73. The brushwood is then mounted on the chute table 67, pushed towards the feeding member 43, moved onto the fixed plate 57, and fed to the rotor 19 by the feeding member 43.

The brushwood fed to the rotor 19 by the feeding member 43 is cut into pieces by the cutting assembly 17 as described above. The cut pieces of the size being equal to or smaller than the diameter of the aperture of the screen 39 pass through the apertures 39a of the screen 39, and fall onto the rear portion 1a of the container 1 from the exhaust port 38. The cut pieces within the rear portion 1a of the container 1 are lifted up by the lifting-up blades 15b, then fall therefrom at the upper position of the lifting-up blades 15b to the slanting surface of the guiding plate 16, and then slide into the inner space of the cylindrical body of the container 1. The cut pieces which are not lifted up to a position above the slanting surface of the guiding plate 16 slide along the lifting-up blades 15b to the inner space of the cylindrical body of the container 1 via the opening of the guide plate 16. Thus, the feeding blades 15a successively feed the cut pieces 15a forwardly within the container 1 via the rotation of the container 1.

The brushwood collecting operation is completed by moving the chute table 67 upwardly to the withdrawal position, and closing the side plates 65. The vehicle is then driven to a site where the collected pieces are processed. The tail gate 12 of the container 1 is opened by the extension of the cylinders 14, and the container 1 is then tilted by the extension of the cylinders 5. Thus, the cut pieces are discharged from the container 1.

The brushwood collecting vehicle of this embodiment is advantageous in the facts as described hereinbelow.

Large sized brushwood can securely be fed to the rotor 19 by mounting them on the chute table 67 and feeding the same by the feeding member 43. The brushwood on the chute table 67 is unlikely to fall therefrom since the side plates 65 block them at the sides of the chute table 67. The chute table 67 and the side plates 65 are neatly arranged in such a manner to contribute to smooth driving of the vehicle.

The handle member 67b with a width substantially equal to that of the chute table 67 and such a dimension or length as to avoid the operator from accidentally touching the feed roller 49 is fixed to the chute table 67. This handle member 67b can, thus, avoid the operator from touching the feed roller 49, during he operates the cutting assembly 17 at the rear side of the vehicle.

The emergency control box 95 on the side plate 65 is controlled for emergency shut down of the hydraulic motors 23 and 47 by the operator in a relatively simple manner, when it is necessary to stop the cutting assembly 17 and the feeding member 43 at the time of an accident or the like.

The slanting surface of the fixed plate 57 allows the brushwood to easily slide on the fixed plate 57, and the feed roller 49 to easily feed the brushwood towards the rotor 19. Thus, this arrangement can contribute to the smooth cutting operation, and the omission of any conventional conveying means such as a belt conveyor at the downstream side of the fixed plate 57. Therefore, the feeding member 43 can be manufactured in a lighter weight or simpler manner.

The feed roller 49 of the upwardly and downwardly movable mechanism can properly feed the brushwood via its motion in accordance with the size of the brushwood. In addition, since the feed roller 49 feeds the brushwood while applying pressure over the same by utilizing its own weight, it is unlikely that the brushwood undesirably slip away from the rotary cutter 33. Thus, the cutting operation can smoothly be carried out.

Since the pivot 55 of the swing arm 53 is positioned on the fixed frame 58 between the rotor 19 and the container 1 to increase the length between the pivot 55 and the feed roller 49, the moving direction of the feed roller 49 via the swing of the swing arm 53 can approximate to the vertical direction relating to the feeding direction of the brushwood, and both the feeding member 43 and the cutting assembly 17 can compactly be mounted to the tail gate 12. As a result, the inner space of the container 1 which can be utilized is preferably increased.

In addition, the swing arm 53 with the pivot 55 positioned below the rotary shaft 51 can be smoothly lifted up, even if the pushing force of the brushwood is forthrightly applied to the feed roller 49.

By the arrangement that the feed roller 49 and the rotor 19 are driven by the pumps 45 and 22 respectively, and hydraulic circuits for the feeding member 43 and the cutting assembly 17 are separately arranged from each other, the feeding member 43 and the cutting assembly 17 can be independently operated. That is, the feeding member 43 can be driven, while the cutting assembly 17 is stopped, or vice versa. Thereby, even if the brushwood, which could not been completely cut and remains between the rotary cutter 33 and the fixed cutter 59, stops the rotation of the cutters 33 and 59, the brushwood can be removed from the remaining position by reversely rotating the feed roller 49.

The discharge of the pumps 45 and 22 are adjusted so that the outer edge of the feeding blade 50 advances 20mm per one rotation of the rotor 19 in this embodiment. This means that the feed roller 49 can be controlled to feed the brushwood of predetermined size towards the rotor 19 based upon the rotational speed of the rotary cutter 33. Thus, the brushwood can be cut into the pieces of predetermined size.

Since the circumferential surface of the rotor 19 defines the escape cutouts 28 of a substantially L-shape, which respectively extend in the rotational direction of the rotor 19 from the protruding positions of the cutting edges 34 of the rotary cutter 33 to predetermined portions, some of the cut pieces of the brushwood subsequently escape into the escape cutouts 28 so that the cut pieces are unlikely to block the rotation of the rotor 19 by unnecessarily remaining around the circumferential surface of the rotor 19 and therefore the subsequent cutting operation can smoothly be carried out.

Since the rising surface 30b of the substantially L-shaped mounting cutout 29 tilts towards the mounting surface 30a, when centrifugal force is applied over the rotary cutter 33 and the pressure member 31 mounted on the mounting cutout 29 by the rotation of the rotary cutter 33, the force of counteraction to this centrifugal force is simultaneously applied over the rotary cutter 33 via the rising surface 30b so that the rotary cutter 33 can securely be clamped by the pressure member 31 and the rotor 19, even if the rotor 19 is rotated at high speed. In addition, the centrifugal force acting over the bolt 37 for fixing the rotary cutter 33 can preferably be reduced.

The aperture 35 elongated in the lengthwise direction of the rotary cutter 33 towards the cutting edge 34 enables the rotary cutter 33 to be easily moved in its lengthwise direction within the range of the length of the aperture 35. In accordance with this arrangement, when the cutting edge 34 has been worn away and does not protrude to predetermined height from the circumferential surface of the rotor 19, the bolt 37 is first loosened to release the rotary cutter 33 from a tightly clamped relationship with the pressure member 31, and the rotary cutter 33 is slid along the bolt 37 via its aperture 35 in such a manner as to adjust the protruding length of the cutting edge 34 of the rotary cutter 33. During this sliding motion, the rotary cutter 33 is unlikely to be diverted sidewards (in the direction parallel to the rotary shaft 20 of the rotor 19), since the width of the aperture 35 is substantially equal to the outer diameter of the leg of the bolt 37.

Even if the rotary cutter 33 is moved away from the rising surface 30b as a result of the adjustment of the protruding length of the cutting edge 34 in the manner as described above, the force of the counteraction to the centrifugal force is still applied over the rotary cutter 33 via the pressure member with its surface contacting the rising surface 30b.

The adjacent arrangement of the mounting cutout 29 and the escape cutout 28 enables the rotary cutter 33 to be easily manufactured. In addition, the mounting of the rotary cutter 33 to the rotor 19 is easily accomplished by simply screwing the bolt 37.

With the screen 39 of the removably attachable arrangement, the cut pieces of the size larger than the diameter of the aperture 39a are held by the screen 39 and cut further by the rotary cutter 33 into smaller pieces so that only the cut pieces of predetermined or smaller size can be placed within the container 1. On the contrary, in the absence of the screen 39, the cut pieces are exhausted into the container 1 from the cutting assembly 17 as they maintain their sizes coming from the exhaust port 38.

By opening the tail gate 12 with the cutting assembly 17 thereon, the cutting assembly 17 within the container 1 is brought out of the container 1 to expose the exhaust port 38 and the screen 39. Thus, the operator can easily reach to these portions for the removal of the screen 39 from the exhaust port 38, or the like operation.

The cut pieces are fed from the cutting assembly 17 to the container 1 without passing the outside of the vehicle. This can prevent the cut pieces from scattering outside of the container 1.

Even if the brushwood has been cut into pieces of a fairly small size, the lifting-up blade 15b mounted inside of the rear portion 1a of the container 1 can securely feed these cut pieces towards the inner space of the cylindrical body of the container 1. In addition, since the edge 15c of the lifting-up blade 15b is bent at an angle of 45° in the rotational direction of the container 1, the cut pieces lifted up by the lifting-up blade 15b are unlikely to fall from the blade 15b to a previous position under the exhaust port 38 before they reach to a position above the slanting surface of the guiding plate 16.

Since the brushwood is cut into pieces prior to being placed within the container 1, large sized brushwood can compactly be placed within the container 1. In addition, with the lifting-up blades 15b and the feeding blades 15a, the cut pieces are successively and forwardly fed within the container 1 so that the cut pieces are unlikely to converge towards a limited area, and can be spread over entirely within the container 1.

When the tail gate 12 is opened to discharge the cut pieces from the container 1, the cutting assembly 17 and the feeding member 43 on the tail gate 12 are lifted up together with the tail gate 12. Accordingly, the cut pieces can smoothly be discharged from the container 1 without the obstruction of these portions.

Although the various advantages as described are obtainable with the above embodiment, it is not necessary to limit the brushwood collecting vehicle to the above embodiment, and therefore various modifications can be made.

In the above embodiment, by employing the feed roller 49 as the feeding member 43, the relevant advantages as described above can be obtained. However, it is possible to employ the feeding member 43 of different forms.

The feeding blades 50 may be omitted from the feed roller 49, and the notches 50a of the feeding blades 50 may also be omitted from the feeding blades 50, even if the feeding blades 50 are employed. However, it is preferable to form the V-shaped notches 50a in case of employing the feed roller 49 as the feeding member 43, since the V-shaped notches 50a enable the feed roller 49 to correct the moving direction of the brushwood, which tends to move sidewards of the fixed plate 57, by securely holding branch portions of the brushwood.

In accordance with the above embodiment, by adjusting the discharge of the hydraulic pump 22, the feed roller 49 is rotatable in association with the rotor 19. However, this associated operation is not essential.

Although the feeding member 43 is controllable by selectively operating the hydraulic pump 22 so that the brushwood of such a size as to be cut by the rotary cutter 33 at one time can be fed to the cutting assembly 17, any conventional driving means other than the hydraulic pump 22 may be employed for carrying out this operation.

In the above arrangement, the hydraulic pumps 22 and 45 are coaxially aligned to the power take-off, the hydraulic pump 45 may be connected to the rotary shaft 20 of the cutting assembly 17. With this arrangement, the feeding member 43 is operated in association with the rotor 19. This is advantageous in the fact that the brushwood is not unnecessarily fed to the rotor 19 during the rotor 19 is not rotated. To accomplish this operation, the rotary shaft 51 may be connected to the rotary shaft 20 of the rotor 19 via a sprocket or the like. With this arrangement, it is possible to omit the motor 47 connected to the rotary shaft 51. However, this arrangement may be troublesome in manufacturing process, since the distance between the shafts 20 and 51 should be maintained to keep the engaging relationships between the shafts 20 and 51, and the sprocket at any points of the path of the feeding member 43. To manufacture the cutting assembly 17 and the upwardly and downwardly movable feeding member 43 as described above, the pump 45 is preferably connected to the shaft 20 of the rotor 19 in order to supply the motor 47 with pressure oil at the time that the rotation of the rotor 19 is stopped.

It is not necessary to limit a cutting assembly for cutting the brushwood in cooperation with the rotary cutter 33 to the fixed cutter 59 of the above embodiment. Varying cutting means can be employed, provided that such cutting means is capable of cutting the brushwood in cooperation with the rotary cutter 33. For example, an edge of the fixed plate 57 may be sharpened to cut the brushwood in the same manner as the fixed cutter 59.

The fixing means 37 for fixing the rotary cutter 33 to the rotor 19 is not limited to the bolt of the above embodiment. Even in the case that the bolt is employed, the aperture 35 of the rotary cutter 33 may be varied in width, and therefore it is not necessary to size the width of the aperture 35 to be substantially equal to the outer diameter of the leg of the bolt 37. The aperture 35 may be elongated to the edge opposite to the cutting edge 34 and open sidewards so that the rotary cutter 33 can more easily be removed from the portion between the pressure member 31 and the rotor 19 simply by loosening the bolt 37.

In the above embodiment, the rising surface 30b rises straightforward from the mounting surface 30a at an acute angle in such a manner as to tilt towards the mounting surface 30a, but the rising surface 30b may be curved, provided that an imaginary straight line between the outermost and innermost points of the rising surface tilts towards the mounting surface 30a.

It is not essential to employ the detachably mounting arrangement for the screen 39, and therefore the screen 39 may be omitted from the arrangement of the vehicle of the present invention. In the absence of the screen 39, the cut pieces are directly exhausted from the cutting assembly 17 via the exhaust port 38 without sifting process.

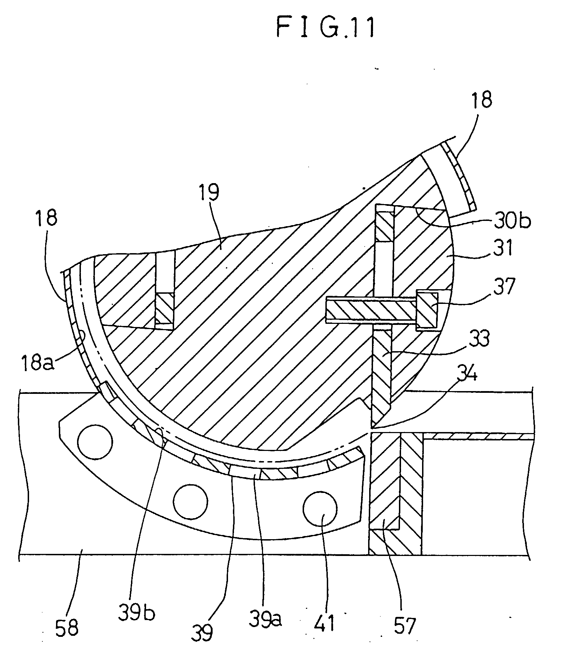

In case that the screen 39 is mounted to the exhaust port 38, it is not essential to position the screen 39 so that the inner surface of the screen 39 lies in an imaginary circular line defined by the inner surface 18a of the cover 18. For example, the screen 39 may be positioned so that the inner surface thereof is positioned more closer to the axis of the rotor 19 as compared with the inner surface 18a of the cover 18, as illustrated in FIG. 11. In this arrangement, the protruding length of the cutting edge 34 of the rotary cutter 33 is set in the order of 10mm from the circumferential surface of the rotor 19, and the clearances of a tip end of the cutting edge 34 to the inner surface 18a of the cover 18 and to the inner surface 39b of the screen 39 are respectively set in the order of 10mm and 5mm. That is, the inner surface 39b of the screen 39 is closer to the rotary shaft 20 of the rotor 19 about 5mm as compared with the inner surface 18a of the cover 18 so that the cut pieces on the screen 39 can more securely be cut by the rotary cutter 33.

The apertures 39a of the screen 39 may be varied in shape. For example, the circular or rectangular apertures 39a may be formed in the screen 39.

It is not essential to bend the edge 15c of the lifting-up blades 15b at an angle of 45°. In addition, the edge 15c may be directed in the rotational direction of the container 1 by bending the edge 15c along a predetermined line, or curving the same through its entire or partial length.

In the above embodiment, a drive means for rotating the container 1 is positioned in the front side of the body D. With this arrangement, the vehicle is well balanced even if the cutting assembly 17 is positioned in the rear side of the body D. However, this arrangement is not essential, and therefore the drive means 17 may be positioned in a varying position, such as in the rear side of the body D.

It is not necessary to limit the tail gate 12 to the above arrangement, and therefore a varying arrangement may be employed, provided that it is capable of opening and closing the opening of the container 1, and carrying the cutting assembly 17 and the feeding member 43 thereon.

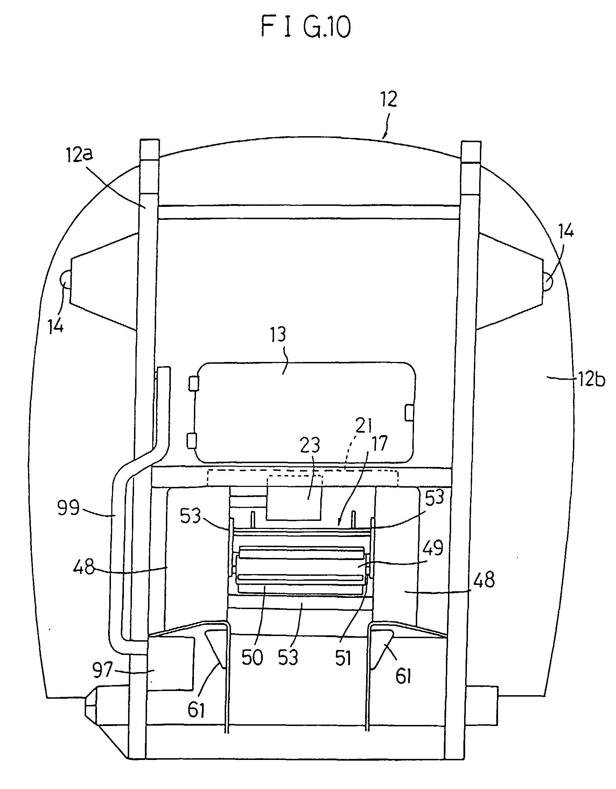

The tail gate 12 may be provided with a suction means 97, as illustrated in FIG. 10. With this arrangement, when the brushwood was scattered on the ground as a result of chopping the tree or the like, the suction means 97 can suck the brushwood directly into the container 1 via a hose 99 of the suction means 97.

## Claims

1. A brushwood collecting vehicle comprising:
a cutting member (17) for cutting brushwood into pieces; and
a container (1) for placing the cut pieces therein;
**characterized by**
a tail gate (12) for opening and closing an opening of the container (1), the tail gate (12) including the cutting member (17) and a feeding member (43) for feeding the brushwood to the cutting member (17);
the cutting member (17) including a rotor (19) being rotatably mounted to the cutting member (17), and a rotary cutter (33) mounted on the rotor (19), the rotary cutter (33) including a cutting edge (34) protruding from the rotor (19) for cutting the brushwood in cooperation with a fixed cutter (59), the cutting member (17) defining an exhaust port (38), through which the cut pieces are exhausted into the inside of the container (1);
the container (1) being rotatably supported on a frame (D); and a blade (15b) protruding from an inner surface of the container (1) for feeding the cut pieces forwardly within the container (1) via the rotation of the container (1).

2. A brushwood collecting vehicle as set forth in claim 1, wherein the feeding member (43) includes a fixed plate (57) with a surface directed towards the rotor (1) for carrying the brushwood thereon, and a feed roller (49) rotatably supported on the feeding member (43) for feeding the brushwood on the surface of the fixed plate towards the rotor (19), the feed roller (49) being movable upwardly and downwardly by the brushwood on the fixed plate (57).

3. A brushwood collecting vehicle as set forth in claim 2, wherein the feed roller (49) is fixed to a swing arm (53) which is pivotally connected at a pivot (55) in such a manner as to be swingable around the pivot (55), the pivot being positioned between the container (1) and the rotor (19), and below a rotary shaft (51) of the feed roller (49) at the time of that the feed roller (49) has swung to the lowermost position.

4. A brushwood collecting vehicle as set forth in any one of claims 2 and 3, wherein the fixed plate (57) is slanted downwardly towards the rotor (19).

5. A brushwood collecting vehicle as set forth in any one of claims 1 to 4, wherein the feeding member (43) is controlled in such a manner as to feed the brushwood of such a size as to be cut by the rotary cutter (33) at one time.

6. A brushwood collecting vehicle as set forth in any one of claims 1 to 5, wherein the rotor (19) defines an escape cutout (28) in the circumferential surface thereof which extends in the rotational direction of the rotor (19) from a protruding position of the cutting edge (34) of the rotary cutter (33) to a predetermined portion for allowing the cut pieces to be escaped therein.

7. A brushwood collecting vehicle as set forth in any one of claims 1 to 6, wherein the rotor (19) defines a substantially L-shaped mounting cutout (29) in the circumferential surface thereof, the mounting cutout (29) being defined by a mounting surface (30a) for contacting a side of the rotary cutter (33) and a rising surface (30b) rising from the mounting surface (30a) in such a manner as to tilt towards the mounting surface (30a).

8. A brushwood collecting vehicle as set forth in any one of claims 1 to 7, wherein the rotary cutter (33) defines an aperture (35), through which a fixing means (37) such as a bolt extends for fixing the rotary cutter (33) to the mounting cutout (29), the aperture (35) being elongated towards the cutting edge (34) so that the rotary cutter (33) can slide towards the cutting edge (34) with regard to the fixing means (37).

9. A brushwood collecting vehicle as set forth in any one of claims 1 to 8, wherein a screen (39) is removably attached to the exhaust port (38), and defines an aperture (39a) therein for allowing the cut pieces of predetermined size to pass therethrough, and holding the cut pieces being larger than predetermined size thereon until the cut pieces are reduced to such a size as to pass through the aperture (39a) in cooperation with the rotary cutter (33).

10. A brushwood collecting vehicle as set forth in any one of claims 1 to 9, wherein an edge (15c) of the blade (15b) is directed in the rotational direction of the container (1).

## Patentansprüche

1. Unterholz aufsammelndes Fahrzeug, umfassend
ein schneidendes Bauteil (17) zum Schneiden des Unterholzes in Stücke; und einen Behälter (1) zur dortigen Ablage der geschnittenen Stücke;
gekennzeichnet durch eine Heckklappe (12) zum Öffnen und Schließen einer Öffnung des Behälters (1), wobei die Heckklappe (12) das schneidende Bauteil (17) und ein zuführendes Bauteil (43) für die Zuführung des Unterholzes zu dem schneidenden Bauteil (17) enthält;
das schneidende Bauteil (17) einschließlich eines Rotors (19), der auf dem schneidenden Bauteil (17) drehbar gelagert ist, und eine Schneidrolle (33), die auf den Rotor (11) montiert ist, wobei die Schneidrolle (33) einschließlich einer Schneidkante (34) über den Rotor (19) hinausragt um das Unterholz in Zusammenarbeit mit einem feststehenden Fräsmesser (59) zu schneiden, wobei das schneidende Bauteil (17) eine Ausgangsöffnung (38) festlegt, durch das die geschnittenen Stücke in das Innere des Behälters (1) ausgelassen werden;
wobei der Behälter (1) drehbar auf einem Rahmen (D) untergestützt ist, und eine Klinge (15b), die von einer Innenfläche des Behälters (1) herausragt, um die geschnittenen Stücke innerhalb des Behälter (1), über die Drehung des Behälters (1), vorwärts zu führen.

2. Unterholz aufsammelndes Fahrzeug gemäß Anspruch 1, worin das zuführende Bauteil (43) eine befestigte Platte (57) enthält, mit einer Oberfläche, die gegen den Rotor (1) gerichtet ist, um das Unterholz dorthin zu bewegen, und eine Speisewalze (49), die drehbar auf das zuführende Bauteil (43) gestützt ist, zum Zuführen des Unterholzes auf die Oberfläche der feststehenden Platte in Richtung des Rotors (19), wobei die Speisewalze (49) durch das Unterholz auf der feststehenden Platte (57) aufwärts und abwärts bewegt werden kann.

3. Unterholz aufsammelndes Fahrzeug gemäß Anspruch 2, worin die Speisewalze (49) an einem Schwenkarm (53) befestigt ist, wobei der Schwenkarm in solch einer Weise gelenkig mit einem Drehzapfen (55) verbunden ist, dass er um den Drehzapfen (55) schwenkbar ist, wobei der Drehzapfen zwischen dem Behälter (1) und dem Rotor (19) angeordnet ist und unterhalb einer Drehwelle (51) der Speisewalze (49) zu dem Zeitpunkt, zu dem die Speisewalze (49)in die tiefstmögliche Stellung geschwungen ist.

4. Unterholz aufsammelndes Fahrzeug gemäß Anspruch 2 und 3, worin die feststehende Platte (57) nach unten in Richtung des Rotors (19) geneigt ist.

5. Unterholz aufsammelndes Fahrzeug gemäß Anspruch 1 bis 4, worin das zuführende Bauteil (43) in solch einer Art und Weise gesteuert wird, dass Unterholz von solch einer Größe zugeführt wird, daß es von der Schneidrolle (33) auf einmal geschnitten werden kann.

6. Unterholz aufsammelndes Fahrzeug gemäß Anspruch 1 bis 5, worin der Rotor (19) einen Auslaßabschnitt (28) in der Umfangsoberfläche davon definiert, wobei diese sich in Rotationsrichtung des Rotors (19) von einer hinausragenden Position der Schneidkante (34) der Schneidrolle (33) zu einem vorherbestimmten Bereich ausdehnt, um den geschnittenen Stücken den Einstrom dorthin zu erlauben.

7. Unterholz aufsammelndes Fahrzeug gemäß Anspruch 1 bis 6, worin der Rotor (19) einen im wesentlichen L-förmig geformten Halterungsausschnitt (29) in der dortigen Umfangsoberfläche definiert, wobei der Halterungsausschnitt (29) durch eine Halterungsoberfläche (30a) für den Kontakt einer Seite der Schneidrolle (33) und eine ansteigende Oberfläche (30b) definiert ist, wobei diese von der Halterungsoberfläche (30a) in solch einer Art und Weise ansteigt, dass sie in Richtung der Halterungsoberfläche geneigt ist.

8. Unterholz aufsammelndes Fahrzeug gemäß Anspruch 1 bis 7, worin die Schneidrolle (33) eine Öffnung (35) definiert, durch die ein feststellendes Bauteil (37), wie ein Riegel, sich zur Befestigung der Schneidrolle (33) an den Halterungsausschnitt (29) erstreckt, wobei die Öffnung (35) sich in Richtung der Schneidkante (34) verlängert, so dass die Schneidrolle (33) in Richtung der Schneidkante (34) gleiten kann in bezug auf das feststellende Bauteil (37).

9. Unterholz aufsammelndes Fahrzeug gemäß Anspruch 1 bis 8, worin eine Abschirmung (39) herausnehmbar an die Auslaßöffnung (38) angebracht ist und eine Öffnung (39a) darin definiert, damit es den geschnittenen Stücken einer vorbestimmten Größe möglich wird, diese Öffnung zu passieren, und wobei die geschnittenen Stücke, die größer sind als die vorbestimmte Größe, darin zurückgehalten werden, bis die geschnittenen Stücke zu solch einer Größe verkleinert werden, dass sie die Öffnung (39a) in Zusammenarbeit mit der Schneidrolle (33) passieren können.

10. Unterholz aufsammelndes Fahrzeug gemäß Anspruch 1 bis 9, worin eine Schneide (15c) der Klinge (15b) in Rotationsrichtung des Behälters (1) gerichtet ist.

## Revendications

1. Véhicule de ramassage du menu bois comprenant :
un élément de coupe (17) pour couper le menu bois en morceaux ; et
une cuve (1) pour mettre dedans les morceaux coupés ;
caractérisé par :
une porte arrière (12) pour ouvrir et fermer une ouverture de la cuve (1), la porte arrière (12) comportant l'élément de coupe (17) et un élément d'alimentation (43) pour alimenter en menu bois l'élément de coupe (17) ;
l'élément de coupe (17) comprenant un rotor (19) monté tournant sur l'élément de coupe (17), et un couteau tournant (33) monté sur le rotor (19), le couteau tournant (33) comprenant un bord de coupe (34) faisant saillie du rotor (19) pour couper le menu bois en coopération avec un couteau fixe (59), l'élément de coupe (17) définissant une ouverture d'évacuation (38), au travers de laquelle les morceaux coupés sont évacués à l'intérieur de la cuve (1) ;
la cuve (1) étant supportée de manière tournante sur un cadre (D), et une lame (15b) faisant saillie sur une face interne de la cuve (1) pour alimenter vers l'avant en morceaux coupés l'intérieur de la cuve (1) au moyen de la rotation de la cuve (1).

2. Véhicule de ramassage du menu bois selon la revendication 1, dans lequel l'élément d'alimentation (43) comprend une plaque fixe (57) ayant une surface dirigée vers le rotor (1) pour porter dessus le menu bois, et un rouleau d'alimentation (49) supporté de manière tournante sur l'élément d'alimentation (43), pour amener le menu bois situé sur la surface de la plaque fixe vers le rotor (19), le rouleau d'alimentation (49) pouvant être déplacé vers le haut et vers le bas par le menu bois situé sur la plaque fixe (57).

3. Véhicule de ramassage du menu bois selon la revendication 2, dans lequel le rouleau d'alimentation (49) est fixé sur un bras basculant (53), lequel est relié à basculement à un pivot (55) de manière à être basculant autour du pivot (55), le pivot étant positionné entre la cuve (1) et le rotor (19), et en dessous de l'arbre tournant (51) du rouleau d'alimentation (49) lorsque le rouleau d'alimentation (49) a basculé vers sa position la plus basse.

4. Véhicule de ramassage du menu bois selon l'une quelconque des revendications 2 et 3, dans lequel la plaque fixe (57) est inclinée vers le bas en direction du rotor (19).

5. Véhicule de ramassage du menu bois selon l'une quelconque des revendications 1 à 4, dans lequel l'élément d'alimentation (43) est commandé de manière à amener une quantité de menu bois telle qu'elle peut être coupée en une seule fois par le couteau tournant (33).

6. Véhicule de ramassage du menu bois selon l'une quelconque des revendications 1 à 5, dans lequel le rotor (19) définit un évidement d'échappement (28) sur sa surface circonférentielle, lequel s'étend dans la direction de rotation du rotor (19) à partir d'une position de saillie du bord coupant (34) du couteau tournant (33) jusqu'à une portion prédéterminée pour permettre aux morceaux coupés de s'échapper dedans.

7. Véhicule de ramassage du menu bois selon l'une quelconque des revendications 1 à 6, dans lequel le rotor (19) définit, dans sa surface circonférentielle, un évidement de montage (29) sensiblement en forme de L, l'évidement de montage (29) étant défini par une surface de montage (30a) destinée à être en contact avec une face du couteau tournant (33), et une surface de remontée (30b) remontant à partir de la surface de montage (30a) de manière à s'incliner vers la surface de montage (30a).

8. Véhicule de ramassage du menu bois selon l'une quelconque des revendications 1 à 7, dans lequel le couteau tournant définit une perforation (35) au travers de laquelle des moyens de fixation (37), tels qu'une vis, s'étendent pour fixer le couteau tournant (33) sur l'évidement de montage (29), la perforation (35) étant allongée vers le bord de coupe (34) de sorte que le couteau tournant (33) puisse coulisser en direction du bord de coupe (34), par rapport aux moyens de fixation (37).

9. Véhicule de ramassage du menu bois selon l'une quelconque des revendications 1 à 8, dans lequel un crible (39) est fixé de manière démontable à l'ouverture d'évacuation (38), et définit une perforation (39a) dans le crible pour permettre aux morceaux coupés d'une taille prédéterminée de passer au travers, et retenir sur le crible les morceaux coupés qui sont plus grands que la taille prédéterminée jusqu'à ce que les morceaux coupés soient réduits à une taille telle qu'ils puissent passer au travers de la perforation (39a) en coopération avec le couteau tournant (33).

10. Véhicule de ramassage du menu bois selon l'une quelconque des revendications 1 à 9, dans lequel un bord (15c) de la lame (15b) est dirigé dans la direction de rotation de la cuve (1).
